# EUROPEAN PATENT SPECIFICATION

(11) **EP 3 483 482 B1**
(45) Date of publication and mention of the grant of the patent: **10.08.2022**
(21) Application number: 18200086.9
(22) Date of filing: 12.10.2018
(51) Int. Cl.: F16H 63/50

(54) **DRIVING-FORCE CONTROL DEVICE**
ANTRIEBSKRAFTSTEUERUNGSVORRICHTUNG
DISPOSITIF DE COMMANDE DE FORCE DE CONDUITE

(30) Priority: 10.11.2017 JP 2017201020
(43) Date of publication of application: 15.05.2019
(73) Proprietor: Hitachi Astemo, Ltd., Hitachinaka-shi, Ibaraki (JP)
(72) Inventor: Mizoguchi, Tetsuya, Shioya-gun,, Tochigi 329-1233 (JP)
(74) Representative: v. Bezold & Partner Patentanwälte - PartG mbB

(56) References cited:
- EP-A1- 3 115 579
- JP-A- 2016 098 728
- US-A1- 2014 045 652
- US-A1- 2017 101 945

## Description

### BACKGROUND OF THE INVENTION

The present invention relates to a driving-force control device mounted on a saddle-ride type vehicle that controls a driving force of a driving wheel depending on whether a front wheel of the saddle-ride type vehicle is lifted.

Among saddle-ride type vehicles such as a two-wheeled automobile, there is a vehicle that includes a dog-type transmission and transmits a driving force of an engine to a driving wheel sequentially via a main clutch and the dog-type transmission. In such a dog-type transmission, a driver can shift gears without operating the main clutch, in a state in which dogs (dog teeth) of the dog-type transmission abut on each other and one of the engine and the driving wheel drives the other one. According to such a configuration, the driver can shift gears quickly without operating the main clutch.

However, in a state in which one of the engine and the driving wheel drives the other one, a large pressing force acts on a contact surface of the dogs of the dog-type transmission. Therefore, even if a driver tries to separate the dogs from each other to shift gears, it tends to be difficult to separate the dogs from each other by an operation of the driver, because a large static frictional force proportional to the pressing force is acting on the contact surface.

On the other hand, as the saddle-ride type vehicle including the dog-type transmission, a vehicle having a configuration in which shift control to suppress a driving force of an engine is executed by controlling a motor drive circuit so that a throttle opening degree becomes a predetermined opening degree deviated from a requested throttle opening degree requested by an accelerator operation toward a smaller opening-degree value at the time of gear shift has been known. By executing such shift control, dogs can be easily separated from each other.

In recent years, a driving-force control device that executes lift control to cancel a state in which a front wheel of a saddle-ride type vehicle is lifted by suppressing a driving force of a driving wheel when the front wheel is lifted has been proposed.

Under such circumstances, International Patent Publication No. WO2014/167983 relates to a driving-force control device that executes lift control and discloses a configuration in which when it is judged that a front wheel is lifted, a driving force is suppressed more than a driving force when the front wheel is lifted. JP 2016 098728 A relates to a shift control apparatus mounted on a straddle type vehicle that transmits the driving force of an engine to driving wheels through a main clutch and a dog type transmission

### SUMMARY OF THE INVENTION

However, according to the studies conducted by the present inventors, in the lift control in the configuration disclosed in the International Patent Publication No. WO 2014/167983, a state in which the front wheel is lifted may not be detected directly. In such a case, there is a time lag after the front wheel actually becomes a lifted state until it is judged that the front wheel is in a lifted state. Therefore, if shift control to suppress the driving force is started during the time lag, lift control is executed to decrease the driving force more than the driving force after being suppressed in the shift control and the driving force is excessively suppressed in the lift control. Therefore, a tendency of deteriorating the drivability is considered because it takes time after the lifted state of the front wheel is canceled until the vehicle is accelerated again.

The present invention has been achieved in view of the studies described above, and an object of the present invention is to provide a driving-force control device that can improve the acceleration performance after canceling a lifted state of a front wheel, even if lift control is started during shift control.

In order to achieve the above object, a first aspect of the present invention is to provide a driving-force control device mounted on a saddle-ride type vehicle that transmits a driving force of an engine to a rear wheel generating a rear wheel torque, sequentially via a main clutch and a dog-type transmission, the driving-force control device including a control unit that executes first control to suppress the driving force when it is judged that a front wheel of the saddle-ride type vehicle is in a lifted state in which the front wheel is lifted, and second control to temporarily change the driving force by releasing or weakening engagement of dogs of the dog-type transmission so that gear shift of the dog-type transmission becomes possible, when a shift operation of the dog-type transmission is detected in a state in which connection of the main clutch is being detected, wherein when the first control is executed while the second control is executed, the control unit sets a lower one of a value of the rear wheel torque calculated in the first control and a value of the rear wheel torque calculated in the second control as a value of a target rear wheel torque.

According to a second aspect of the present invention, in addition to the first aspect, when the first control is executed while the second control is executed, the control unit temporarily suppresses the value of the target rear wheel torque and then increases the value of the target rear wheel torque.

In the driving-force control device according to the first aspect of the present invention, the driving-force control device is mounted on a saddle-ride type vehicle that transmits a driving force of an engine to a rear wheel sequentially via a main clutch and a dog-type transmission, and includes a control unit that executes first control to suppress the driving force when it is judged that a front wheel of the saddle-ride type vehicle is in a lifted state in which the front wheel is lifted, and second control to temporarily change the driving force by releasing or weakening engagement of dogs of the dog-type transmission so that gear shift of the dog-type transmission becomes possible, when a shift operation of the dog-type transmission is detected in a state in which connection of the main clutch is being detected. When it is judged that the front wheel is in a lifted state while the second control is executed, the control unit suppresses the driving force more than the driving force at a time of starting the second control by the first control. Accordingly, even if the lift control is started during execution of the shift control, the acceleration performance after canceling the lifted state of the front wheel can be improved.

In the driving-force control device according to the second aspect of the present invention, the control unit temporarily suppresses the driving force and then increases the driving force by the second control, and suppresses by the first control the driving force increased by the second control. Accordingly, it can be prevented that the driving force is excessively suppressed by the first control.

### BRIEF DESCRIPTION OF THE DRAWINGS

FIG. 1 is a block diagram showing a configuration of a driving-force control device according to an embodiment of the present invention; and
FIG. 2 is a diagram showing chronological passage of vehicle speed and rear wheel torque when driving-force control processing according to the present embodiment is performed.

### DETAILED DESCRIPTION OF THE PREFERRED EMBODIMENT

A driving-force control device according to an embodiment of the present invention is explained in detail below with reference to the drawings as appropriate.

### <Configuration of driving-force control device>

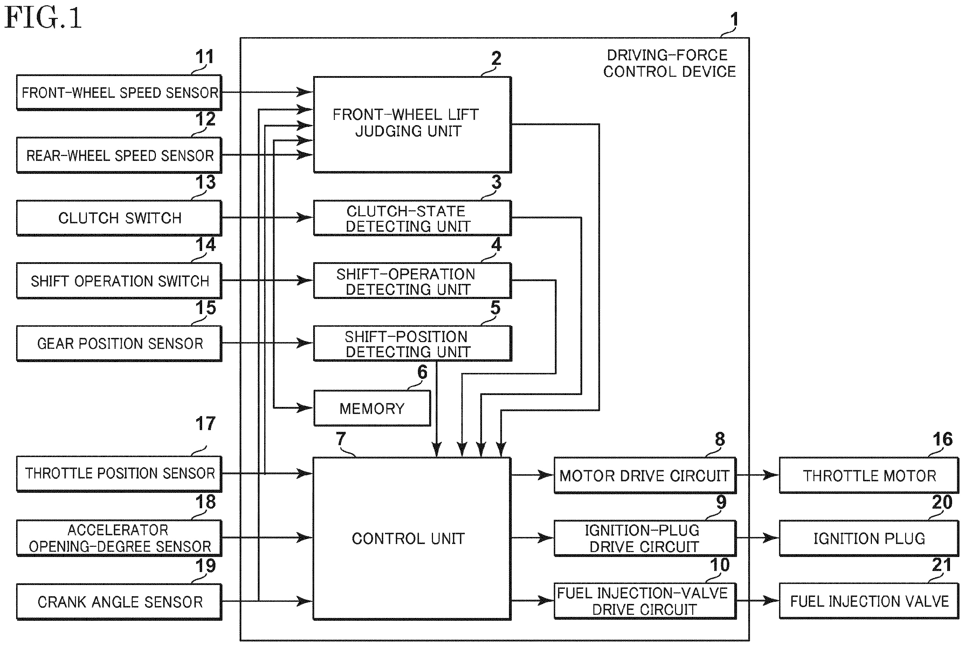

A configuration of a driving-force control device according to the present embodiment is described first with reference to FIG. 1.

FIG. 1 is a block diagram showing a configuration of the driving-force control device according to the present embodiment.

As shown in FIG. 1, a driving-force control device 1 according to the present embodiment is configured of an electronic control device such as an ECU (Electronic Control Unit) and is typically mounted on a saddle-ride type vehicle such as a two-wheeled automobile in which a driving force of an engine is transmitted to a driving wheel via a dog-type transmission (not shown).

The driving-force control device 1 includes a front-wheel lift judging unit 2, a clutch-state detecting unit 3, a shift-operation detecting unit 4, a shift-position detecting unit 5, a memory 6, a control unit 7, a motor drive circuit 8, an ignition-plug drive circuit 9, and a fuel injection-valve drive circuit 10. These front-wheel lift judging unit 2, clutch-state detecting unit 3, shift-operation detecting unit 4, shift-position detecting unit 5, and control unit 7 are typically configured as functional blocks at the time of executing a control program in a CPU (Central Processing Unit) of the driving-force control device 1. However, these units can be configured as electric circuits according to need.

The front-wheel lift judging unit 2 judges whether a front wheel is in a lifted state (hereinafter referred to as "lifted state") based on input signals from a front-wheel speed sensor 11 that detects front wheel speed being speed of rotation of a front wheel as a driven wheel of a saddle-ride type vehicle, a rear-wheel speed sensor 12 that detects rear wheel speed being speed of rotation of a rear wheel as a driving wheel of the saddle-ride type vehicle, a throttle position sensor 17, and a crank angle sensor 19. The throttle position sensor 17 inputs an electric signal corresponding to a throttle opening degree of an engine. The crank angle sensor 19 inputs an electric signal corresponding to a crank angle (a rotation angle of a crank shaft) of the engine.

Specifically, the front-wheel lift judging unit 2 calculates rear wheel torque corresponding to the current actual throttle opening degree and the current engine speed based on map data stored in the memory unit 6 based on input signals from the throttle position sensor 17 and the crank angle sensor 19. When a value obtained by dividing a difference between the front wheel speed indicated by an input signal from the front-wheel speed sensor 11 and the rear wheel speed indicated by an input signal from the rear-wheel speed sensor 12 by the front wheel speed indicated by the input signal from the front-wheel speed sensor 11 is within a range of a predetermined value, the rear wheel torque calculated as described above is equal to or larger than a predetermined value, and an acceleration rate of the front wheel speed indicated by the input signal from the front-wheel speed sensor 11 is equal to or lower than a negative predetermined value, the front-wheel lift judging unit 2 judges that the front wheel is in a lifted state. The rear wheel torque is an output value directly reflecting acceleration/deceleration characteristics of the saddle-ride type vehicle and is generated by the rear wheel by transmitting a driving force generated and output by the engine via a drive transmission system.

The front-wheel lift judging unit 2 inputs an electric signal corresponding to a judgment result of whether the front wheel is in a lifted state judged in the manner described above to the control unit 7.

The clutch-state detecting unit 3 detects connection or disconnection of a main clutch based on an input signal from a clutch switch 13 that carries information regarding a driver' s operation when a driver connects or disconnects the main clutch. The clutch-state detecting unit 3 inputs an electric signal corresponding to an on and off operation of the main clutch detected in this manner.

The shift-operation detecting unit 4 detects a shift operation of a dog-type transmission based on an input signal from a shift operation switch 14 that carries information regarding a shift operation when the driver performs the shift operation of the dog-type transmission. The shift-operation detecting unit 4 inputs an electric signal corresponding to the presence of the shift operation of the dog-type transmission detected in this manner to the control unit 7.

The shift-position detecting unit 5 detects a shift position (a gear position) being selected by the dog-type transmission based on a signal corresponding to the shift position being selected by the dog-type transmission corresponding to a rotation position of a shift drum of the dog-type transmission, which is output from a gear position sensor 15. The shift-position detecting unit 5 inputs an electric signal indicating the shift position detected in this manner to the control unit 7.

The memory 6 stores therein a control program and the like required for the driving-force control device 1. The memory 6 stores therein map data required for calculating the rear wheel torque corresponding to the current actual throttle opening degree and the current engine speed.

The control unit 7 controls the motor drive circuit 8, the ignition-plug drive circuit 9, and the fuel injection-valve drive circuit 10 by using inputs signals from the front-wheel lift judging unit 2, the clutch-state detecting unit 3, the shift-operation detecting unit 4, and the shift-position detecting unit 5 and input signals from the throttle position sensor 17, an accelerator opening-degree sensor 18, and the crank angle sensor 19, by executing the control program and the like stored in the memory 6. The accelerator opening-degree sensor 18 inputs an electric signal corresponding to an operation amount of an accelerator operating member (an opening degree of the accelerator) such as an accelerator grip of the saddle-ride type vehicle.

The control unit 7 executes shift control for temporarily changing the driving force of the engine by releasing or weakening engagement of the dogs of the dog-type transmission so that gear shift of the dog-type transmission becomes possible and executes lift control for suppressing the driving force of the engine in order to cancel the lifted state of the front wheel.

Specifically, in the shift control, if the shift-operation detecting unit 4 detects a shift operation of the dog-type transmission in a state in which the clutch-state detecting unit 3 is detecting connection of the main clutch, the control unit 7 controls the ignition-plug drive circuit 9 and/or the fuel injection-valve drive circuit 10 so as to stop ignition and/or stop fuel injection, and controls the motor drive circuit 8 so as to adjust the opening degree of a throttle valve of the engine (a throttle opening degree), that is, an actual throttle opening degree being a real throttle opening degree. The control unit 7 inputs respective control signals for stopping ignition, stopping fuel injection, and adjusting the throttle opening degree to the ignition-plug drive circuit 9, the fuel injection-valve drive circuit 10, and the motor drive circuit 8.

Further, the control unit 7 starts the lift control when a judgment result indicated by an input signal from the front-wheel lift judging unit 2 shows that the front wheel is in a lifted state and inputs a control signal for suppressing the driving force of the engine to the motor drive circuit 8, the ignition-plug drive circuit 9, and the fuel injection-valve drive circuit 10. At this time, when starting to execute the lift control while the shift control is not being executed, the control unit 7 executes control to suppress the driving force of the engine more than the driving force when it is judged that the front wheel is in a lifted state. When starting to execute the lift control while the shift control is being executed, the control unit 7 executes control to suppress the driving force of the engine more than the driving force at the time of starting the shift control.

The motor drive circuit 8 controls the throttle opening degree by driving a throttle motor 16 according to a control signal from the control unit 7.

The ignition-plug drive circuit 9 controls an ignition operation to the engine by an ignition plug 20 of the engine, that is, a series of ignition operations such as start, stop, and restart of ignition according to a control signal from the control unit 7.

The fuel injection-valve drive circuit 10 controls a series of fuel injection operations of a fuel injection valve 21 that injects fuel to the engine, that is, start, stop, and restart of fuel injection according to a control signal from the control unit 7.

### <Driving-force control processing>

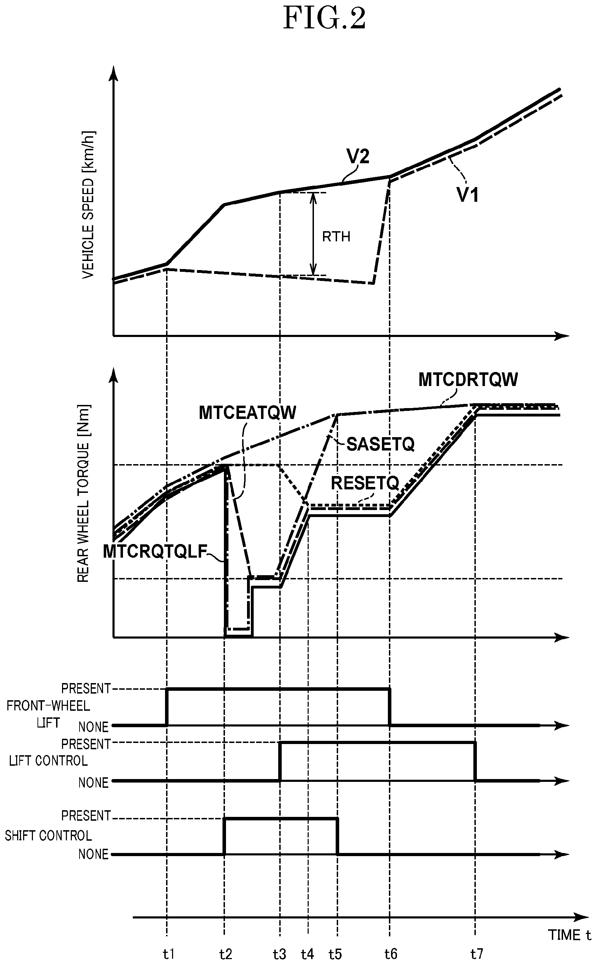

The driving-force control device 1 having the configuration described above performs driving-force control processing for controlling the driving force of the engine. A specific flow of the driving-force control processing according to the present embodiment is described below in detail with reference to FIG. 2.

FIG. 2 is a diagram showing chronological passage of the vehicle speed and the rear wheel torque when the driving-force control processing according to the present embodiment is performed. In a chronological change of the vehicle speed in FIG. 2, V1 shows the front wheel speed and V2 shows the rear wheel speed, respectively. In a chronological change of the rear wheel torque in FIG. 2, MTCEATQW shows actual rear wheel torque being real rear wheel torque at the time of starting the shift control, SASETQ shows shift assist control torque that temporarily suppresses the actual rear wheel torque MTCEATQW in the shift control, RESETQ shows lift control torque that temporarily suppresses the actual rear wheel torque MTCEATQW in the lift control, MTCRQTQLF shows target rear wheel torque of the actual rear wheel torque MTCEATQW, and MTCDRTQW shows rider requested torque requested by an accelerator operation of a driver, respectively.

The driving-force control processing shown in FIG. 2 is started at a timing when an ignition switch of a saddle-ride type vehicle is first turned on to activate the driving-force control device 1. The driving-force control processing is repeatedly performed for every predetermined control cycle.

At a time t=t1, a front wheel of the saddle-ride type vehicle starts to be lifted.

At and after the time t=t1, because the front wheel becomes a lifted state, a difference between the front wheel speed V1 and the rear wheel speed V2 gradually increases.

At a time t=t2, the control unit 7 starts the shift control, and as shown in FIG. 2, calculates the shift assist control torque SASETQ that temporarily suppresses the actual rear wheel torque MTCEATQW, which is the real rear wheel torque at the time of starting the shift control. The control unit 7 sets the calculated shift assist control torque SASETQ as the target rear wheel torque MTCRQTQLF and controls the motor drive circuit 8, the ignition-plug drive circuit 9, and the fuel injection-valve drive circuit 10 so that the actual rear wheel torque MTCEATQW matches with the target rear wheel torque MTCRQTQLF. Accordingly, at and after the time t=t2, the driving force of the engine is temporarily suppressed and then changed to increase (return), and is maintained at a certain value. In accordance with this change, the actual rear wheel torque MTCEATQW is temporarily suppressed and then changed to increase (return), and is maintained at a certain value. The control unit 7 stores and holds the front wheel speed V1 detected by the front-wheel speed sensor 11 at the time t=t2, which is the time of starting the shift control, as an initial value in the memory 6.

At a time t=t3, because a value obtained by dividing a difference RTH between the front wheel speed V1 and the rear wheel speed V2 by the front wheel speed becomes within a range of a predetermined value, the rear wheel torque becomes equal to or larger than a predetermined value, and the acceleration rate of the front wheel speed becomes equal to or lower than a negative predetermined value, the front-wheel lift judging unit 2 judges that the front wheel is in a lifted state. The control unit 7 starts the lift control during execution of the shift control, because the front-wheel lift judging unit 2 judges that the front wheel is in a lifted state. In this manner, a time lag (t3-t1) occurs between a timing at which the front wheel actually becomes the lifted state and a timing at which it is judged that the front wheel is in a lifted state.

The control unit 7 sequentially corrects the initial value, which is the front wheel speed at the time t=t2 held in the memory 6, by using a predetermined correction amount by the lift control to calculates the lift control torque RESETQ that suppresses the actual rear wheel torque MTCEATQW gradually from the actual rear wheel torque MTCEATQW at the time t=t2 to predetermined torque.

In a period from the time t=t3 to a time t=t4, the control unit 7 sets not the lift control torque RESETQ but the shift assist control torque SASETQ as the target rear wheel torque MTCRQTQLF continuously, because the shift assist control torque SASETQ suppresses the torque more than the lift control torque RESETQ. In this manner, when executing the lift control and the shift control together, the control unit 7 sets a lower one of the lift control torque RESETQ and the shift assist control torque SASETQ as the target rear wheel torque MTCRQTQLF. In the shift control, the control unit 7 controls the motor drive circuit 8, the ignition-plug drive circuit 9, and the fuel injection-valve drive circuit 10 so that the actual rear wheel torque MTCEATQW matches with the target rear wheel torque MTCRQTQLF. Accordingly, in the period from the time t=t3 to the time t=t4, the driving force of the engine gradually increases, and with the increase, the actual rear wheel torque MTCEATQW gradually increases.

At the time t=t4, because the actual rear wheel torque MTCEATQW matches with both the lift control torque RESETQ and the shift assist control torque SASETQ which are suppressed to the predetermined torque during the shift control and during the increase of the driving force of the engine, the control unit 7 sets the lift control torque RESETQ as the target rear wheel torque MTCRQTQLF to switch the target rear wheel torque MTCRQTQLF. Then in the lift control, the control unit 7 controls the motor drive circuit 8, the ignition-plug drive circuit 9, and the fuel injection-valve drive circuit 10 so that the actual rear wheel torque MTCEATQW matches with the switched target rear wheel torque MTCRQTQLF, thereby suppressing the driving force of the engine more than that at the time t=t2. Accordingly, even if the lift control is started during execution of the shift control, it can be avoided that the driving force of the engine is excessively suppressed in the lift control, the acceleration performance after canceling the lifted state of the front wheel can be improved, and excessive deceleration of the vehicle in a lifted state of the front wheel can be suppressed.

In a period from the time t=t4 to a time t=t6, the control unit 7 sets the lift control torque RESETQ to be constant by executing the lift control continuously to set the target rear wheel torque MTCRQTQLF to be constant, and controls the motor drive circuit 8, the ignition-plug drive circuit 9, and the fuel injection-valve drive circuit 10 so that the actual rear wheel torque MTCEATQW matches with the constant target rear wheel torque MTCRQTQLF. Accordingly, in the period from the time t=t4 to the time t=t6, the driving force of the engine maintains a constant value and the actual rear wheel torque MTCEATQW also maintains a constant value.

At the time t=t5, because the shift assist control torque SASETQ matches with the rider requested torque MTCDRTQW, the control unit 7 ends the shift control. The shift assist control torque SASETQ matches with the rider requested torque MTCDRTQW at the time t=t5.

At the time t=t6, the lifted state of the front wheel is canceled. Accordingly, as shown in FIG. 2, there is no difference between the front wheel speed V1 and the rear wheel speed V2.

At and after the time t=t6, the control unit 7 executes the lift control so that the lift control torque RESETQ gradually approaches the rider requested torque MTCDRTQW, thereby causing the target rear wheel torque MTCRQTQLF to approach the rider requested torque MTCDRTQW. The control unit 7 also controls the motor drive circuit 8, the ignition-plug drive circuit 9, and the fuel injection-valve drive circuit 10 so that the actual rear wheel torque MTCEATQW matches with the target rear wheel torque MTCRQTQLF. Accordingly, at and after the time t=t6, the driving force of the engine gradually increases, and with the increase, the actual rear wheel torque MTCEATQW gradually increases.

At a time t=t7, because the lift control torque RESETQ and the target rear wheel torque MTCRQTQLF match with the rider requested torque MTCDRTQW, the control unit 7 ends the lift control.

In the driving-force control device according to the present embodiment described above, when it is judged that a front wheel is in a lifted state while shift control is executed, the driving force is suppressed more than that at the time of starting the shift control by lift control. Accordingly, even when the lift control is started during the shift control, the acceleration performance after canceling the lifted state of the front wheel can be improved.

Further, in the driving-force control device according to the present embodiment, because the driving force is increased after being temporarily suppressed by the shift control and the driving force increased by the shift control is suppressed by the lift control, it can be prevented that the driving force is excessively suppressed by the lift control.

In the present invention, the type, form, arrangement, number, and the like of the constituent members are not limited to those in the embodiment described above, and it is needless to mention that the constituent elements can be modified as appropriate without departing from the scope of the appended claims.

Specifically, in the embodiment described above, the lifted state of the front wheel is judged by using the front wheel speed detected by the front-wheel speed sensor 11 and the rear wheel speed detected by the rear-wheel speed sensor 12. However, the lifted state of the front wheel can be judged by using an acceleration sensor. In this case, when the acceleration rate detected by the acceleration sensor becomes equal to or higher than a predetermined value, it is judged that the front wheel is in a lifted state.

As described above, the present invention can provide a driving-force control device that can improve the acceleration performance after canceling the lifted state of a front wheel, even when lift control is started during shift control. Therefore, because of its general purposes and universal characteristics, applications of the present invention can be expected in a wide range in a driving-force control device of a saddle-ride type vehicle such as a two-wheeled automobile.

## Claims

1. A driving-force control device (1) mounted on a saddle-ride type vehicle that transmits a driving force of an engine to a rear wheel generating a rear wheel torque, sequentially via a main clutch and a dog-type transmission, the driving-force control device (1) comprising:
a control unit (7) that executes first control to suppress the driving force when it is judged that a front wheel of the saddle-ride type vehicle is in a lifted state in which the front wheel is lifted, and second control to temporarily change the driving force by releasing or weakening engagement of dogs of the dog-type transmission so that gear shift of the dog-type transmission becomes possible, when a shift operation of the dog-type transmission is detected in a state in which connection of the main clutch is being detected,
wherein when the first control is executed while the second control is executed, the control unit (7) sets a lower one of a value of the rear wheel torque calculated in the first control (RESETQ) and a value of the rear wheel torque calculated in the second control (SASETQ) as a value of a target rear wheel torque (MTCRQTQLF).

2. The driving-force control device (1) according to claim 1, wherein when the first control is executed while the second control is executed, the control unit (7) temporarily suppresses the value of the target rear wheel torque and then increases the value of the target rear wheel torque.

## Patentansprüche

1. Antriebskraft-Steuervorrichtung (1), die an einem Sattelfahrt-Typ-Fahrzeug angebracht ist, das eine Antriebskraft eines Motors sequentiell über eine Hauptkupplung und ein Klauengetriebe, ein Hinterrad-Drehmoment erzeugend auf ein Hinterrad überträgt, wobei die Antriebskraft-Steuervorrichtung (1) umfasst:
eine Steuereinheit (7), die eine erste Steuerung ausführt, um die Antriebskraft zu unterdrücken, wenn beurteilt wird, dass sich ein Vorderrad des Sattelfahrt-Typ-Fahrzeugs in einem angehobenen Zustand befindet, in dem das Vorderrad angehoben ist, und eine zweite Steuerung ausführt, um die Antriebskraft temporär zu ändern, indem der Eingriff von Klauen des Klauengetriebes gelöst oder geschwächt wird, so dass ein Gangwechsel des Klauengetriebes möglich wird, wenn ein Schaltvorgang des Klauengetriebes in einem Zustand erfasst wird, in dem eine Verbindung der Hauptkupplung erfasst wird,
wobei, wenn die erste Steuerung ausgeführt wird, während die zweite Steuerung ausgeführt wird, die Steuereinheit (7) einen geringeren Wert von einem Wert des in der ersten Steuerung (RESETQ) berechneten Hinterraddrehmoments und einem Wert des in der zweiten Steuerung (SASETQ) berechneten Hinterraddrehmoments als einen Wert eines Ziel-Hinterraddrehmoments (MTCRQTQLF) festlegt.

2. Antriebskraft-Steuerungsvorrichtung (1) gemäß Anspruch 1, wobei, wenn die erste Steuerung ausgeführt wird, während die zweite Steuerung ausgeführt wird, die Steuereinheit (7) den Wert des Ziel-Hinterraddrehmoments zeitweilig unterdrückt und dann den Wert des Ziel-Hinterraddrehmoments erhöht.

## Revendications

1. Dispositif de commande de force motrice (1) monté sur un véhicule de type à selle qui transmet une force motrice d'un moteur à une roue arrière générant un couple de roue arrière, séquentiellement par l'intermédiaire d'un embrayage principal et d'une boîte de vitesses à crabots, le dispositif de commande de force motrice (1) comprenant :
une unité de commande (7) qui exécute une première commande pour supprimer la force motrice lorsqu'il est jugé qu'une roue avant du véhicule de type à selle est dans un état levé dans lequel la roue avant est levée, et une seconde commande pour changer provisoirement la force motrice en libérant ou en affaiblissant un engagement de crabots de la boîte de vitesses à crabots de sorte qu'un changement de rapport de la boîte de vitesses à crabots devienne possible, lorsqu'une opération de changement de rapport de la boîte de vitesses à crabots est détectée dans un état dans lequel une connexion de l'embrayage principal est détectée,
dans lequel, lorsque la première commande est exécutée pendant que la seconde commande est exécutée, l'unité de commande (7) règle une valeur inférieure parmi une valeur du couple de roue arrière calculée dans la première commande (RESETQ) et une valeur du couple de roue arrière calculée dans la seconde commande (SASETQ) en tant qu'une valeur d'un couple de roue arrière cible (MTCRQTQLF).

2. Dispositif de commande de force motrice (1) selon la revendication 1, dans lequel, lorsque la première commande est exécutée pendant que la seconde commande est exécutée, l'unité de commande (7) supprime provisoirement la valeur du couple de roue arrière cible puis augmente la valeur du couple de roue arrière cible.
